# EUROPÄISCHE PATENTSCHRIFT

(11) **EP 0 991 588 B1**
(45) Veröffentlichungstag und Bekanntmachung des Hinweises auf die Patenterteilung: **07.03.2001**
(21) Anmeldenummer: 98929375.8
(22) Anmeldetag: 26.05.1998
(51) Int. Cl.: C01B 13/11

(54) **MONTIERBARES KONTAKTELEMENT FÜR EINE RÖHRE MIT EINER ÄUSSEREN ELEKTRODE**
MOUNTABLE CONTACT ELEMENT FOR A TUBE WITH AN EXTERNAL ELECTRODE
ELEMENT DE CONTACT MONTABLE POUR UN TUBE COMPORTANT UNE ELECTRODE EXTERNE

(30) Priorität: 17.06.1997 DE 19725524
(43) Veröffentlichungstag der Anmeldung: 12.04.2000
(73) Patentinhaber: SCHOTT-GERÄTE GmbH, 65719 Hofheim a. Ts. (DE)
(72) Erfinder: HENRICH, Peter, D-65830 Kriftel (DE); GÜNTHER, Siegfried, D-65817 Eppstein (DE); RIEGE, Günter, D-65195 Wiesbaden (DE)
(74) Vertreter: Fuchs Mehler Weiss & Fritzsche
(86) Internationale Anmeldenummer: EP9803080
(87) Internationale Veröffentlichungsnummer: WO9857885

(56) Entgegenhaltungen:
- EP-A- 0 246 344
- EP-A- 0 313 802
- DE-A- 2 606 731
- US-A- 4 877 588
- DATABASE CHEMABS CHEMICAL ABSTRACTS SERVICE, COLUMBUS, OHIO, US SAPIEZYNSKI, WIESLAW ET AL: "Ozone generator for water purification" XP002078976 & PL 157 693 B (INSTYTUT MECHANIKI PRECYZYJNEJ)
- PATENT ABSTRACTS OF JAPAN vol. 002, no. 008 (C-001), 20. Januar 1978 & JP 52 111488 A (TOSHIBA CORP), 19. September 1977

## Beschreibung

Die Erfindung bezieht sich auf ein montierbares Kontaktelement für eine Röhre aus einem elektrisch nichtleitenden Werkstoff, die eine umlaufende äußere elektrisch leitende Beschichtung als Elektrode aufweist.

Bei bestimmten technischen Anwendungen liegt das Problem vor, eine mechanisch stabile und elektrisch sehr gut leitende hochspannungsfeste montierbare Kontaktierung zu einer Elektrode herzustellen, die als elektrisch leitende umlaufende Außenbeschichtung auf einer Röhre aus einem elektrisch nichtleitenden Werkstoff, insbesondere aus Glas oder Glaskeramik, aufgebracht ist.

Eine solche Anwendung liegt beispielsweise bei einem Röhren-Ozonisator vor, wie er in der DE 195 11 001 A1 beschrieben ist.

An eine Kontaktierung für derartige außenbeschichtete Glaszylinder, die als Ozonröhren Anwendung finden, sind folgende Anforderungen gestellt:
- hohe Ozonbeständigkeit
- Hochspannungsfestigkeit
- kleiner Übergangswiderstand Kontakt/Glasrohr trotz hoher Rauhigkeit der leitfähigen Glasbeschichtung
- Kontaktierung über den gesamten Zylinderumfang im Kontaktbereich
- fester mechanischer Sitz auf dem Glasrohr
- minimale äußere Abmessungen
- Sicherstellung, daß bei der Kontaktmontage weder Beschichtung noch Glas beschädigt werden können
- möglichst geringer Montage-/Demontageaufwand

Bei anderen Anwendungen sind vergleichbare Forderungen zu erfüllen. Die vorgenannte Schutzrechtsschrift zeigt keine konstruktiv konkrete Ausbildung eines Kontaktelementes, das den vorstehenden Forderungen genügen würde.

Insbesondere die Forderung nach einem kleinen Übergangswiderstand schließt die klassischen Kontaktierungen, wie etwa Kontakte in Form von Hülsen, die den zu kontaktierenden Bereich mantelförmig umschließen, aus.

Eine derartige Kontaktierung ist beispielsweise aus der DE 26 06 731 B 2 bekannt geworden, die einen röhrenförmigen Ozonerzeuger zeigt mit einer Außenelektrode, vorzugsweise in Form einer Metallfolie auf einem Glasrohr, die von einem Außenmantel umgeben ist, der axial segmentiert ist, wobei die Segmente durch Spannorgane zusammengehalten werden, um die Außenelektrode an das Glasrohr aber auch um den Außenmantel an die Außenelektrode anzupressen. An diesen Außenmantel wird dann ein Pol der Hochspannungsquelle angeschlossen. Prinzipbedingt kann dabei kein durchgehender flächiger Kontakt zwischen Außenmantel und Außenelektrode entstehen.

Der Erfindung liegt die Aufgabe zugrunde, das eingangs bezeichnete montierbare Kontaktelement so auszubilden, daß es den vorgenannten Anforderungen anwendungsspezifisch genügt.

Die Lösung dieser Aufgabe gelingt gemäß der Erfindung dadurch, daß zwei axial beabstandet angeordnete Kontaktringe mit elektrisch leitenden und mechanisch stabilisierenden Verbindungselementen zu der Elektrode vorgesehen sind, die bei mindestens einem Kontaktring als peripher umlaufende Kontaktbürsten ausgebildet sind, und daß die Kontaktringe über axial verlaufende Stege, die auf einen gemeinsamen Anschlußpunkt geführt sind, untereinander mechanisch und elektrisch leitend verbunden sind.

Die über Stege miteinander verbundenen beiden auf axialen Abstand angeordnete Kontaktringe gewährleisten einen festen mechanischen Sitz auf dem außenbeschichteten Rohr bei minimalen äußeren Abmessungen. Die Kontaktbürsten sorgen dabei für einen kleinen Übergangswiderstand trotz der quasi natürlichen Rauhigkeit der leitfähigen Außenbeschichtung und für eine hochspannungsfeste Kontaktierung über den gesamten Zylinderumfang im Kontakbereich. Das Kontaktelement kann dabei mit geringem Aufwand auf das beschichtete Rohr montiert bzw. auch von ihm wieder abgenommen werden, wobei durch die Konstruktion sichergestellt ist, daß bei der Montage/Demontage weder die Beschichtung noch das Rohr selbst beschädigt werden können.

Durch eine geeignete Werkstoffwahl kann dabei ebenfalls sichergestellt werden, daß das Kontaktelement eine hohe Beständigkeit gegen umgebende aggressive Medien, z.B. gegen Ozon, aufweist.

Gemäß einer bevorzugten, vorteilhaften Ausgestaltung der Erfindung sind beide Kontaktringe mit peripher umlaufenden Kontaktbürsten versehen. Grundsätzlich ist es jedoch denkbar, nur einen Kontaktring als Bürstenring auszuführen, der primär den elektrischen Kontakt bildet, und an dem zweiten Kontaktring lediglich massive Führungselemente vorzusehen, die primär eine sichere mechanische, d.h. "wackelfreie" Halterung auf dem beschichteten Rohr gewährleisten.

Aus der US-4,877,588 ist ein Röhren-Ozonisator bekannt geworden, bei dem ein dielektrischer Zylinder, koaxial und beabstandet umgeben von einer leitenden zylindrischen Zwischenwand als Außenelektrode, innen mehrere leitfähige Bereiche als Innenelektrode aufweist, an die eine Hochspannung anlegbar ist. Die Hochspannungszuleitung besteht aus einem im Zentrum des dielektrischen Zylinders angeordneten steifen Leiter, der einen äußeren Hochspannungs-Kontakt aufweist und der jeweils auf Höhe der inneren leitfähigen Bereiche des dielektrischen Zylinders sich radial im Bogen von 360° erstreckende Bürstenkontakte zur Übertragung der Hochspannung von dem zentrischen Leiter auf die innere Elektrode besitzt.

Da im bekannten Fall die Bürstenkontakte nur für eine stationäre Kontaktgebung vorgesehen und auch entsprechend ausgebildet sind, können sie keinen Hinweis zur Lösung des der Erfindung zugrundeliegenden technischen Problems geben, nämlich eine mechanisch stabile und elektrisch sehr gut leitende hochspannungsfeste montierbare Kontaktierung zu einer Elektrode herzustellen, die als elektrisch leitende umlaufende Außenbeschichtung auf einer Glasröhre aufgebracht ist.

Einen besonders günstigen kleinen Übergangswiderstand und eine besonders hohe Beständigkeit gegen aggressive Medien, insbesondere gegen Ozon, läßt sich gemäß einer weiteren Ausgestaltung der Erfindung erreichen, wenn die Kontaktringe mit den Kontaktbürsten sowie die Stege aus Stahl mit der Bezeichnung ST 1.4571 bestehen, und in Verbindung damit die Borsten der Kontaktbürsten einen Durchmesser in der Größenordnung von 0,02 mm besitzen. Die einzelnen Borsten passen sich aufgrund des geringen Durchmessers und ihrer natürlichen federnden Eigenschaften einer rauhen Oberfläche sehr gut an und gewährleisten daher eine sichere Kontaktierung.

Einen symmetrischen Kontakt- und damit auch Führungsdruck erhält man gemäß einer weiteren Ausgestaltung der Erfindung, wenn drei um 120° peripher versetzte Stege vorgesehen sind, d.h. eine Dreipunktlagerung realisiert wird.

Weitere ausgestaltende Merkmale, Vorteile sowie Anwendungsmöglichkeiten der Erfindung ergeben sich aus der nachfolgenden Beschreibung eines in der Zeichnung dargestellten Ausführungsbeispieles.

Es zeigen:

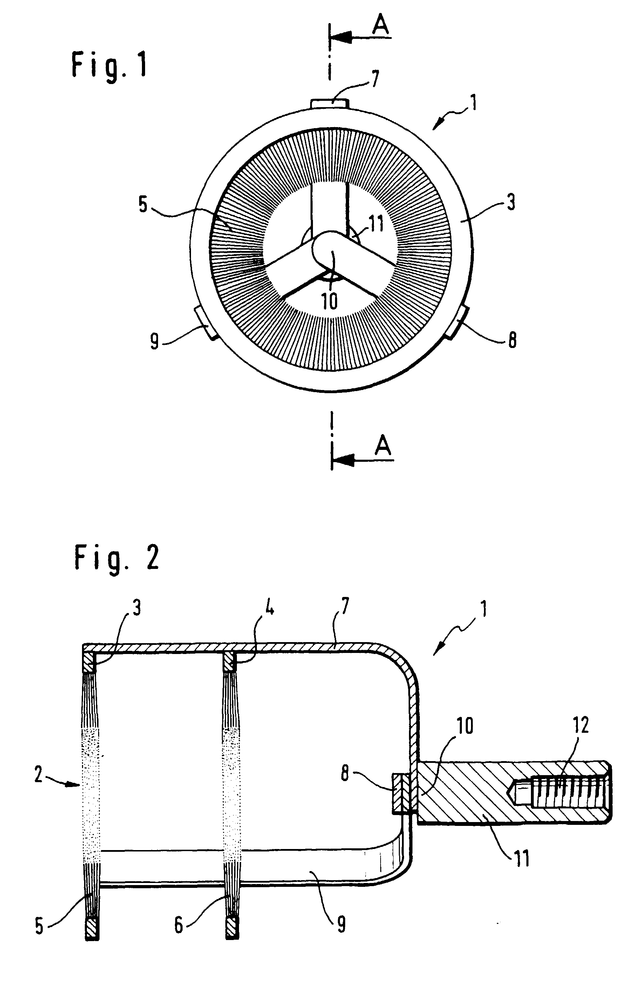

- Fig. 1: eine Draufsicht auf die Öffnung des erfindungsgemäßen Kontaktelementes, und
- Fig. 2: einen Längsschnitt durch das Kontaktelement, genommen entlang der Schnittlinie A-A in Fig. 1.

Die Figuren zeigen ein Kontaktelement 1, das über seine Öffnung 2 auf eine nicht dargestellte Röhre aus einem elektrisch nichtleitenden Werkstoff, vorzugsweise Glas oder Glaskeramik, die eine umlaufende äußere elektrisch leitende Beschichtung als Elektrode aufweist, montierbar ist. Eine derartige Röhre ist Gegenstand der eingangs zitierten DE 195 11 001 A1, so daß an dieser Stelle hierauf Bezug genommen werden kann.

Anstelle des Werkstoffes Glas bzw. Glaskeramik kann auch ein Kunststoff entsprechender Härte verwendet werden.

Das Kontaktelement 1 weist zwei axial beabstandete Kontaktringe 3, 4 auf, die beide im Inneren peripher umlaufende, kreisringförmig angeordnete Kontaktbürsten 5, 6 besitzen.

Die Kontaktringe 3, 4 sind über drei axial sich erstreckende Stege 7, 8 und 9 untereinander mechanisch und elektrisch verbunden. Die Stege sind auf einen gemeinsamen Anschlußpunkt 10 geführt und dort z.B. mittels Punktschweißung miteinander verbunden, wie auch die Stege 7, 8, 9 vorzugsweise durch Punktschweißung mit den Kontaktringen 3, 4 verbunden sind.

Alle Komponenten des erfindungsgemäßen Kontaktelementes sind vorzugsweise aus dem Werkstoff Stahl mit der Bezeichnung St 1.4571 hergestellt.

Der Durchmesser der Borsten der Kontaktbürsten 5, 6 in den Bürstenringen 5, 6 beträgt vorzugsweise 0,02 mm. Die einzelnen Borsten passen sich dann aufgrund ihres geringen Durchmessers und ihrer natürlichen federnden Eigenschaften der rauhen Oberfläche der Rohrelektrode an und gewährleisten eine sichere Kontaktierung.

An dem gemeinsamen Verbindungspunkt 10 ist ein Gewindebolzen 11 angeschweißt, dessen Innengewinde 12 dem Schraubanschluß einer üblichen Stabsicherung entspricht. Damit läßt sich beispielsweise in einem Röhrenozonisator, bei dem mehrere Röhren mit dem erfindungsgemäßen Kontaktelement zusammengeschaltet sind, jede einzelne Röhre absichern, so daß im Störungsfall andere Röhren nicht in Mitleidenschaft gezogen werden.

Durch die beiden axial beabstandet angeordneten Kontaktringe 3, 4, die mit ihrem jeweiligen Bürstensatz 5, 6 satt auf der Außenbeschichtung der Röhre aufliegen, wird ein mechanisch sehr stabiles Kontaktelement mit ausgezeichneten elektrischen Eigenschaften geschaffen. Der bei Tests ermittelte Übergangswiderstand zwischen Kontaktelement und beschichtetem Glaszylinder von 0,01 Ohm änderte sich nicht bei axialer und radialer Bewegung des Kontaktelementes während der Messung.

Zudem erlaubt das erfindungsgemäße Kontaktelement eine Adaptierung eines Sicherungselementes im KV-Bereich.

Zur Verbindung mit dem außenbeschichteten Glaszylinder wird das Kontaktelement 1 mit seiner Öffnung 2 axial über den Glaszylinder geschoben bei gleichzeitiger radialer Drehung; analog erfolgt das Lösen der Verbindung.

Vorzugsweise findet eine Röhre, die mit dem erfindungsgemäßen Kontaktelement 1 versehen ist, Anwendung in einem Röhrenozonisator. Zu diesem Zweck wird die außenbeschichtete Elektrode der Röhre mit einem Dielektrikum versehen, mit einem Entladungsspalt zwischen dem Dielektrikum und einer zweiten äußeren koaxialen Elektrode. Durch Anlegen einer Hochspannung von 5-20 KV mit einer Frequenz von ca. 50 Hz an die beiden Elektroden und Einleiten eines sauerstoffhaltigen Gases in den Entladungsspalt wird durch eine stille Entladung Ozon erzeugt. Derartige Ozonisatoren sind beispielsweise durch die eingangs bezeichnete Schutzrechtsschrift bekannt, in der sich auch Angaben über die verwendeten Materialien finden.

## Patentansprüche

1. Montierbares Kontaktelement (1) für eine Röhre aus einem elektrisch nichtleitenden Werkstoff, die eine umlaufende äußere elektrisch leitende Beschichtung als Elektrode aufweist, dadurch gekennzeichnet, daß zwei axial beabstandet angeordnete Kontaktringe (3, 4) mit elektrisch leitenden und mechanisch stabilisierenden Verbindungselementen zu der Elektrode vorgesehen sind, die bei mindestens einem Kontaktring (3, 4) als peripher umlaufende Kontaktbürsten (5, 6) ausgebildet sind, und daß die Kontaktringe (3, 4) über axial verlaufende Stege (7, 8, 9), die auf einen gemeinsamen Anschlußpunkt (10) geführt sind, untereinander mechanisch und elektrisch leitend verbunden sind.

2. Kontaktelement nach Anspruch 1, dadurch gekennzeichnet, daß beide Kontaktringe (3, 4) mit peripher umlaufenden Kontaktbürsten (5, 6) versehen sind.

3. Kontaktelement nach Anspruch 1 oder 2, dadurch gekennzeichnet, daß die Kontaktringe (3, 4) mit den Kontaktbürsten (5, 6) sowie die Stege (7, 8, 9) aus Stahl mit der Bezeichnung ST 1.4571 bestehen.

4. Kontaktelement nach einem der Ansprüche 1 bis 3, dadurch gekennzeichnet, daß die Borsten der Kontaktbürsten (5, 6) einen Durchmesser in der Größenordnung von 0,02 mm besitzen.

5. Kontaktelement nach einem der Ansprüche 1 bis 4, dadurch gekennzeichnet, daß drei jeweils um 120° peripher versetzte Stege (7, 8, 9) vorgesehen sind.

6. Kontaktelement nach einem der Ansprüche 1 bis 5, dadurch gekennzeichnet, daß die Röhre eine zylindrische Glas- oder Glaskeramikröhre eines Röhren-Ozonisators ist, die von einem Dielektrikum und einem Entladungsspalt zwischen diesem und einer zweiten äußeren koaxialen Elektrode umgeben ist.

## Claims

1. Mountable contact element (1) for a tube made of an electrically non-conductive material, which tube has an external electrically conductive coating all the way around as its electrode, characterized in that two axially spaced-apart contact rings (3, 4) with electrically conductive and mechanically stabilizing connection elements to the electrode are provided, which for at least one contact ring (3, 4) are designed as peripherally encompassing contact bruches (5, 6), and in that the contact rings (3, 4) are connected to one another mechanically and electrically conductively via axially extending ribs (7, 8, 9) that are carried to a common connection point (10).

2. Contact element according to Claim 1, characterized in that both contact rings (3, 4) are provided with peripherally encompassing contact brushes (5, 6).

3. Contact element according to Claim 1 or 2, characterized in that the contact rings (3, 4), along with the contact brushes (5, 6) and the ribs (7, 8, 9), are made of steel having the designation ST 1.4571.

4. Contact element according to one of Claims 1 to 3, characterized in that the bristles of the contact brushes (5, 6) have a diameter of the order of magnitude of 0.02 mm.

5. Contact element according to one of Claims 1 to 4, characterized in that three ribs (7, 8, 9), peripherally offset by 120° each, are provided.

6. Contact element according to one of Claims 1 to 5, characterized in that the tube is a cylindrical glass or glass-ceramic tube of a tube ozonizer and is surrounded by a dielectric and a discharge gap between the dielectric and a second external coaxial electrode.

## Revendications

1. Elément de contact montable (1) pour un tube constitué d'une matière non conductrice de l'électricité, qui présente un revêtement extérieur électriquement conducteur qui l'entoure complètement et sert d'électrode, caractérisé en ce qu'il est prévu deux anneaux de contact espacés de façon axiale (3, 4) pourvus d'éléments de connexion à l'électrode assurant une stabilisation mécanique et électriquement conducteurs, lesquels sont formés en tant que balais de contact à enveloppement périphérique (5, 6) dans au moins un anneau de contract (3, 4), et en ce que les anneaux de contact (3, 4) sont connectés l'un à l'autre d'une manière mécaniquement et électriquement conductrice par l'intermédiaire de nervures s'étendant de façon axiale (7, 8, 9) qui sont conduites à un point de connexion commun (10).

2. Elément de contact conformément à la revendication 1, caractérisé en ce que les deux anneaux de contact (3, 4) sont pourvus de balais de contact à enveloppement périphérique (5, 6).

3. Elément de contact conformément à la revendication 1 ou 2, caractérisé en ce que les anneaux de contact (3, 4) avec les balais de contact (5, 6), ainsi que les nervures (7, 8, 9) sont constitués d'acier portant la désignation ST 1.4571.

4. Elément de contact conformément à l'une quelconque des revendications 1 à 3, caractérisé en ce que les poils des balais de contact (5, 6) ont un diamètre d'un ordre de grandeur de 0,02 mm.

5. Elément de contact conformément à l'une quelconque des revendications 1 à 4, caractérisé en ce qu'il est prévu trois nervures (7, 8, 9) décalées chacune de façon périphérique de 120°.

6. Elément de contact conformément à l'une quelconque des revendications 1 à 5, caractérisé en ce que le tube est un tube de verre ou de vitrocéramique cylindrique d'un ozoniseur tubulaire, qui est entouré par un diélectrique et par un intervalle de décharge situé entre le diélectrique et une seconde électrode coaxiale extérieure.
